# EUROPEAN PATENT SPECIFICATION

(11) **EP 1 891 798 B1**
(45) Date of publication and mention of the grant of the patent: **16.07.2014**
(21) Application number: 06755956.7
(22) Date of filing: 08.06.2006
(51) Int. Cl.: H04M 3/42, G06F 15/16, H04L 29/08, H04W 4/10, H04W 8/08, H04W 76/00, H04W 80/10, H04W 84/08, H04L 29/06

(54) **SYSTEM, NETWORK ENTITY, TERMINAL, METHOD, AND COMPUTER PROGRAM PRODUCT FOR PRESENCE PUBLICATION**
SYSTEM, NETZWERKENTITÄT, ENDGERÄT, VERFAHREN UND COMPUTERPROGRAMMPRODUKT ZUR PRÄSENZPUBLIKATION
SYSTEME, ENTITE DE RESEAU, TERMINAL, PROCEDE, ET PROGICIEL POUR INFORMER SUR LA PRESENCE

(30) Priority: 13.06.2005 US 689936 P; 29.11.2005 US 289007
(43) Date of publication of application: 27.02.2008
(73) Proprietor: Nokia Corporation, 02610 Espoo (FI)
(72) Inventor: KISS, Krisztian, Del Mar, CA 92014 (US); HAUKKA, Tao, FIN-90580 Oulu (FI); KUURE, Pekka, FIN-02180 Espoo (FI)
(74) Representative: Read, Matthew Charles
(86) International application number: PCT/IB2006/001621
(87) International publication number: WO 2006/134484

(56) References cited:
- EP-A1- 1 492 307
- WO-A2-03/056850
- US-A1- 2004 122 896
- US-A1- 2005 009 542
- "Push to talk over Cellular (PoC) - Architecture" 3GPP DRAFT; OMA-AD-POC_V1_0-20040430-D, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Montreal; 20040804, 4 August 2004 (2004-08-04), XP050250141 [retrieved on 2004-08-04]
- GARCIA-MARTIN NOKIA M: "A Session Initiation Protocol (SIP) Event Package and Data Format for various settings in support for the Push-to-talk Over Cellular (PoC) service; draft-garcia-sipping-poc-isb-am-01.txt" IETF STANDARD-WORKING-DRAFT, INTERNET ENGINEERING TASK FORCE, IETF, CH, no. 1, 15 December 2004 (2004-12-15), XP015037877 ISSN: 0000-0004
- NIEMI A ET AL: "An Event State Publication Extension to the Session Initiation Protocol (SIP); draft-ietf-sip-publish-04.txt" IETF STANDARD-WORKING-DRAFT, INTERNET ENGINEERING TASK FORCE, IETF, CH, vol. sip, no. 4, 28 May 2004 (2004-05-28), XP015028017 ISSN: 0000-0004
- KISS K.: 'Requirements for Presence Service in 3GPP Wireless Systems' NETWORK WORKING GROUP, NOKIA, [Online] 28 February 2002, pages 1 - 26, XP015003953 Retrieved from the Internet: <URL:http://www.draft-kiss-simple-presence- wireless-reqs-02>
- KISS K.: 'Requirements for Presence Service in 3GPP Wireless Systems' NETWORK WORKING GROUP, NOKIA, [Online] 18 October 2003, pages 1 - 26, XP015030946 Retrieved from the Internet: <URL:http://www.draft-kiss-simple-presence- wireless reqs-03>

## Description

### BACKGROUND OF THE INVENTION

Wireless communication systems and networks are used in connection with many applications and devices, including for example, portable communication devices (PCDs) (e.g., cellular telephones), portable digital assistants (PDAs), laptop computers, or any suitable device that is capable of communicating with a wireless network. PCDs are also known as mobile stations, mobile nodes, access terminals (AT), and by other names. Each of these portable communication devices may also function as an Internet Protocol (IP) client.

Examples of wireless communications networks include GSM (Global Systems for Mobile Communication), WCDMA (Wideband Code Division Multiple Access), and CDMA (Code Division Multiple Access). CDMA systems operate by dividing a radio spectrum to be shared by multiple users through the assignment of unique codes. CDMA systems assign a unique code to each signal that is to be transmitted, and are thereby able to spread many simultaneous signals across a wideband spread spectrum bandwidth. Using the respective codes, the signals can then be detected and isolated from the other signals that are being transmitted over the same bandwidth.

A feature of many mobile devices included in these wireless communication systems is presence enabling, which allows users of these devices to determine whether other mobile devices are online and available for communication. Presence, or status, may be defined as the availability and willingness of a device (termed a "presentity") for communication. Presence, or status, information, in the form of a variety of presence states, can be published by users to other system users, known as "watchers" or "subscribers," to indicate the user's communication status. Status, or presence, information can generally be broken down into information related to (1) the user; (2) the device; or (3) the network services. This information may vary depending on the type of device. For instance, for cellular telephones or other mobile devices, the status information may include the user's geographic location and the latency of the network to which the mobile device is connected. Alternatively, the status information for a personal computer with a wired Internet connection may include, for example, whether the user is online.

Presence information has multiple sources, such as the user or device itself, or a network-based presence source, also known as a Presence Network Agent (PNA). A PNA publishes presence information any time the presence information state of any device on the network changes, such as, when a particular device's availability changes (e.g., when the device first attaches to the network). A network-based Presence Server manages the collection and controlled dissemination of the presence information over the network. In particular, the Presence Server aggregates the presence information received from the various sources and creates a presence document, which it then makes available to other users on the network. In order for the PNA to publish presence information relating to a particular device, and for the Presence Server to gather the information, it is necessary that each device be readily identifiable.

A feature of some mobile devices that is becoming increasingly popular is push-to-talk over cellular (PoC). PoC is like having a 'walkie-talkie' feature on the mobile device that is implemented over the cellular network. PoC offers real-time, instant voice chat with one or many individuals or groups. PoC is a half-duplex (i.e., communication can only occur in one direction at a time) voice over internet protocol (VoIP) system for mobile devices, and is based on IMS, an IP protocol layer positioned on top of the traditional wireless IP protocols in the mobile handset. The Open Media Alliance (OMA) PoC solution is based on the Session Initiation Protocol (SIP) and Real Time Protocol (RTP) defined by the Internet Engineering Task Force (IETF).

Presence status may be used in conjunction with PoC service. For example, several presence attributes, such as availability for session, availability for alerts, and session participation, may be reported to a presence server such that a PoC user's presence may be determined by a watcher. According to current wireless communication industry standards for PoC service, presence status reporting is an optional feature of PoC service. Additionally, presence status for a PoC client may optionally be reported to a presence server by either the PoC client, the PoC server associated with the client, or both. When both the PoC client and the PoC server are reporting presence status to a presence server, it is possible that conflicting information may be reported to the presence server. For example, as the presence status of a PoC client changes, the PoC server may also be aware of the changing status. If both the PoC client and the PoC server are reporting presence information to the presence server, the presence server may have conflicting information for some transitional period. The presence server would typically not have capability to reconcile such a conflict and would therefore report different statuses to a watcher. This conflicting information may cause confusion for the watcher. Additionally, if both the PoC server and the PoC client are reporting the same presence information, this results in unnecessary and redundant network traffic.

"Push to talk over Cellular (PoC)" - Architecture" 3GPP DRAFT; OMA-AD-POC V1 0-20040430-D relates to defining the architecture for the PoC service enabler.

Garcia-Martin Nokia M: "A Session Initiation Protocol (SIP) Event Package and Data Format for various settings in support for the Push-to-talk Over Cellular (PoC) service; draft-garcia-sipping-poc-isb-am-01.txt" relates to defining a SIP event package to support publication, subscription and notification of additional capabilities required by the PoC service.

Niemi A et al: "An Event State Publication Extension to the Session Initiation Protocol (SIP); draft-ietf-sip-publish-04.txt" relates to an extension to the SIP for publishing event state used within the SIP Events framework.

### BRIEF SUMMARY OF THE INVENTION

The invention is defined by the claims.

Generally described, embodiments of the invention provide an improvement over the known prior art by providing a means by which the reporting of conflicting presence status information to a presence server may be avoided. In a system in which two different entities may be capable of reporting status information for the same entity, the two different entities may be capable of reporting status information corresponding to one or more of a predefined plurality of status attributes. The two different entities may each be capable of reporting status information corresponding to the same or different ones of the plurality of status attributes. In such a system, the first entity would typically inform the second entity which ones of the plurality of status attributes for which the first entity will be reporting status information to the presence server. For the ones of the plurality of status attributes for which the first entity will be reporting status information, the second entity will typically not report status information. For the ones of the plurality of status attributes for which the first entity will not be reporting status information, the second entity will typically report status information if the second entity is capable of reporting status information for those attributes.

### BRIEF DESCRIPTION OF THE DRAWING

Having thus described the invention in general terms, reference will now be made to the accompanying drawing, which are not necessarily drawn to scale, and wherein:
FIG. 1 is a block diagram of one type of terminal and system that would benefit from embodiments of the invention;
FIG. 2 is a schematic block diagram of an entity capable of operating as a mobile station, game server, routing server, personal computer (PC) system, game console, presence server, and/or PoC server, in accordance with embodiments of the invention;
FIG. 3 is a schematic block diagram more particularly illustrating a mobile station, in accordance with one embodiment of the invention; and
FIG. 4 is flowchart of publishing presence capability, in accordance with one embodiment of the invention.

### DESCRIPTION OF THE INVENTION

Embodiments of the inventions now will be described more fully hereinafter with reference to the accompanying drawing, in which some, but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

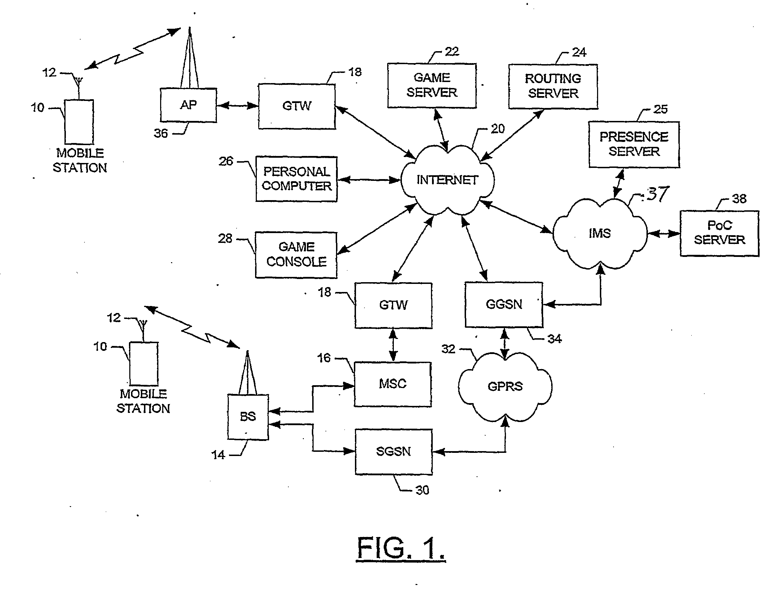

Referring to FIG. 1, an illustration of one type of system that would benefit from embodiments of the invention is provided. Embodiments of the invention will be primarily described in conjunction with mobile communications applications. It should be understood, however, that embodiments of the present invention can be utilized in conjunction with a variety of other applications, both in the mobile communications industries and outside of the mobile communications industries. For example, embodiments of the invention can be utilized in conjunction with wireline and/or wireless network (e.g., Internet) applications.

The system can include one or more mobile stations 10, each having an antenna 12 for transmitting signals to and for receiving signals from one or more base stations (BS's) 14. The base station is a part of one or more cellular or mobile networks that each includes elements required to operate the network, such as one or more mobile switching centers (MSC) 16. As well known to those skilled in the art, the mobile network may also be referred to as a Base Station/MSC/Interworking function (BMI). In operation, the MSC is capable of routing calls, data or the like to and from mobile stations when those mobile stations are making and receiving calls, data or the like. The MSC can also provide a connection to landline trunks when mobile stations are involved in a call.

The MSC 16 can be coupled to a data network, such as a local area network (LAN), a metropolitan area network (MAN), and/or a wide area network (WAN). The MSC can be directly coupled to the data network. In one typical embodiment, however, the MSC is coupled to a Gateway (GTW) 18, and the GTW is coupled to a WAN, such as the Internet 20. In turn, devices such as processing elements (e.g., personal computers, server computers or the like) can be coupled to the mobile station 10 via the Internet. For example, as explained below, the processing elements can include one or more processing elements associated with one or more game servers 22, routing servers 24, personal computer (PC) systems 26, game consoles 28, presence servers 25, or the like, one of each being illustrated in FIG. 1 and described below. As will be appreciated, the processing elements can comprise any of a number of processing devices, systems or the like capable of operating in accordance with embodiments of the present invention.

The BS 14 can also be coupled to a Serving GPRS (General Packet Radio Service) Support Node (SGSN) 30. As known to those skilled in the art, the SGSN is typically capable of performing functions similar to the MSC 16 for packet switched services. The SGSN, like the MSC, can be coupled to a data network, such as the Internet 20. The SGSN can be directly coupled to the data network. In a more typical embodiment, however, the SGSN is coupled to a packet-switched core network, such as a GPRS core network 32. The packet-switched core network is then coupled to another GTW, such as a GTW GPRS support node (GGSN) 34, and the GGSN is coupled to the Internet.

The GGSN 30 and Internet 20 can be coupled to a IP multimedia subsystem (IMS) 37 that includes various entities for the provision of multimedia services, such as in a manner defined by the third generation partnership project (3GPP). As explained in greater detail below, the IMS can be coupled to an application server for providing the push-to-talk over cellular (PoC) service, also known as PTT, push-to-talk service or the like. Thus, as shown, the application server providing the PoC service is referred to as a PoC server 38.

Although not every element of every possible network is shown and described herein, it should be appreciated that the mobile station 10 may be coupled to one or more of any of a number of different networks. In this regard, mobile network(s) can be capable of supporting communication in accordance with any one or more of a number of first-generation (1G), second-generation (2G), 2.5G and/or third-generation (3G) mobile communication protocols or the like. More particularly, one or more mobile stations may be coupled to one or more networks capable of supporting communication in accordance with 2G wireless communication protocols IS-136 (TDMA), GSM, IS-95 (CDMA), and CDMA2000. Also, for example, one or more of the network(s) can be capable of supporting communication in accordance with 2.5G wireless communication protocols GPRS, Enhanced Data GSM Environment (EDGE), or the like. In addition, for example, one or more of the network(s) can be capable of supporting communication in accordance with 3G wireless communication protocols such as Universal Mobile Telephone System (UMTS) network employing Wideband Code Division Multiple Access (WCDMA) radio access technology. Some narrow-band AMPS (NAMPS), as well as TACS, network(s) may also benefit from embodiments of the present invention, as should dual or higher mode mobile stations (e.g., digital/analog or TDMA/CDMA/analog phones).

One or more mobile stations 10 (as well as one or more processing elements, although not shown as such in FIG. 1) can further be coupled to one or more wireless access points (APs) 36. The AP's can be configured to communicate with the mobile station in accordance with techniques such as, for example, radio frequency (RF), Bluetooth (BT), infrared (IrDA) or any of a number of different wireless networking techniques, including WLAN techniques. The APs may be coupled to the Internet 20. Like with the MSC 14, the AP's can be directly coupled to the Internet. In one embodiment, however, the APs are indirectly coupled to the Internet via a GTW 18. As will be appreciated, by directly or indirectly connecting the mobile stations and the user processors (e.g., game servers 22, routing servers 24, personal computer (PC) systems 26, game consoles 28, PoC servers 38, presence servers 25, etc.) and/or any of a number of other devices to the Internet, whether via the AP's or the mobile network(s), the mobile stations and user processors can communicate with one another to thereby carry out various functions of the respective entities, such as to transmit and/or receive data, content or the like. As used herein, the terms "data," "content," "information," and similar terms may be used interchangeably to refer to data capable of being transmitted, received and/or stored in accordance with embodiments of the present invention. Thus, use of any such terms should not be taken to limit the scope of the present invention.

Although not shown in FIG. 1, in addition to or in lieu of coupling the mobile stations 10 to game servers 22, routing servers 24, personal computer (PC) systems 26 and/or game consoles 28 across the Internet 20, one or more such entities may be directly coupled to one another. As such, one or more network entities may communicate with one another in accordance with, for example, KF, BT, IrDA or any of a number of different wireline or wireless communication techniques, including LAN and/or WLAN techniques.

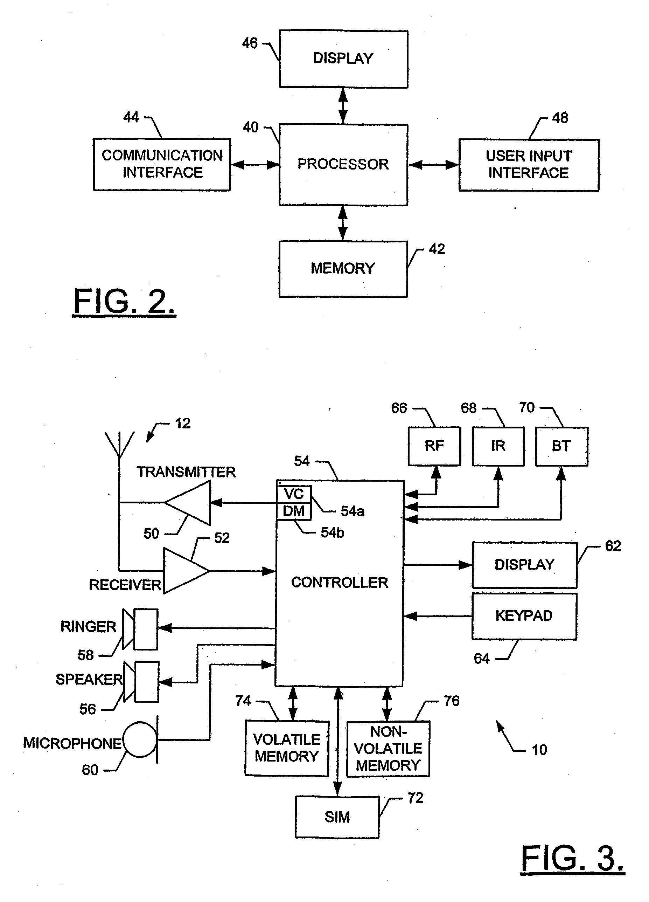

Referring now to FIG. 2, a block diagram of an entity capable of operating as a mobile station 10, game server 22, routing server 24, personal computer (PC) system 26, game console 28, presence server 25, and/or PoC server 38, is shown in accordance with one embodiment of the present invention. Although shown as separate entities, in some embodiments, one or more entities may support one or more of a mobile station, game server, routing server, personal computer (PC) system, PoC server, presence server, and/or game console, logically separated but co-located within the entit(ies). For example, a single entity may support a logically separate, but co-located, game server and routing server. Also, for example, a single entity may support a logically separate, but co-located personal computer and game console. Additionally or alternatively, a single entity may support a logically separate, but co-located game server and one or more of a mobile station, PC system and/or game console.

As shown, the entity capable of operating as a mobile station 10, game server 22, routing server 24, personal computer (PC) system 26, game console 28, presence server 25 and/or PoC server 38 includes various means for performing one or more functions in accordance with exemplary embodiments of the invention, including those more particularly shown and described herein. It should be understood, however, that one or more of the entities may include alternative means for performing one or more like functions, without departing from the scope of the invention.

More particularly, for example, as shown in FIG. 2, the entity generally includes means, such as a processor 40, connected to a memory 42 for controlling operations of the entity. The memory can comprise volatile and/or non-volatile memory, and typically stores content, data or the like. For example, the memory typically stores content transmitted from, and/or received by, the entity. Also for example, the memory typically stores client applications, instructions or the like for the processor to perform steps associated with operation of the entity in accordance with embodiments of the present invention. As explained below, for example, the memory can store client application(s) including a configuration utility, content manager and/or display manager. In this regard, when executed, the configuration utility may function to configure a source of content to receive or otherwise provide content. The content manager, when executed, may function to manage the receipt of content from the source, and/or the use of content received from the source. And the display manager may function to manage presentation of content received from the source. As described herein, the client application(s) each comprise software operated by the respective entities. It should be understood, however, that any one or more of the client applications described herein can alternatively comprise firmware or hardware, without departing from the spirit and scope of the present invention.

In addition to the memory 42, the processor 40 can also be connected to at least one interface or other means for displaying, transmitting and/or receiving data, content or the like. In this regard, the interface(s) can include at least one communication interface 44 or other means for transmitting and/or receiving data, content or the like, as well as at least one user interface that can include a display 46 and/or a user input interface 48. The user input interface, in turn, can comprise any of a number of devices allowing the entity to receive data from a user, such as a keypad, a touch display, a joystick or other input device.

Reference is now made to FIG. 3, which illustrate one type of access terminal or mobile station 10, a mobile telephone, which would benefit from embodiments of the present invention. It should be understood, however, that the mobile station illustrated and hereinafter described is merely illustrative of one type of mobile station that would benefit from the present invention and, therefore, should not be taken to limit the scope of the present invention. While several embodiments of the mobile station are illustrated and will be hereinafter described for purposes of example, other types of mobile stations, such as portable digital assistants (PDAs), pagers, laptop computers, mobile gaming devices and other types of electronic systems, can readily employ the present invention.

The terminal 10 includes various means for performing one or more functions in accordance with exemplary embodiments of the present invention, including those more particularly shown and described herein. It should be understood, however, that the terminal may include alternative means for performing one or more like functions, without departing from the spirit and scope of the present invention. As shown, in addition to an antenna 12, the mobile station 10 can include a transmitter 50, receiver 52, and means, such as a controller 54 or other processor, that provides signals to and receives signals from the transmitter and receiver, respectively. These signals include signaling information in accordance with the air interface standard of the applicable cellular system, and also user speech and/or user generated data. In this regard, the mobile station can be capable of operating with one or more air interface standards, communication protocols, modulation types, and access types. More particularly, the mobile station can be capable of operating in accordance with any of a number of first generation (1G), second generation (2G), 2.5G and/or third-generation (3G) communication protocols or the like. For example, the mobile station may be capable of operating in accordance with 2G wireless communication protocols IS-136 (TDMA), GSM, and IS-95 (CDMA). Also, for example, the mobile station may be capable of operating in accordance with 2.5G wireless communication protocols GPRS, EDGE, or the like. Further, for example, the mobile station may be capable of operating in accordance with 3G wireless communication protocols such as UMTS network employing WCDMA radio access technology. Some NAMPS, as well as TACS, mobile stations may also benefit from the teaching of this invention, as should dual or higher mode phones (e.g., digital/analog or TDMA/CDMA/analog phones).

It is understood that the controller 54 includes the circuitry required for implementing the audio and logic functions of the mobile station 10. For example, the controller may be comprised of a digital signal processor device, a microprocessor device, and various analog-to-digital converters, digital-to-analog converters, and other support circuits. The control and signal processing functions of the mobile station are allocated between these devices according to their respective capabilities. The controller can additionally include an internal voice coder (VC) 54a, and may include an internal data modem (DM) 54b. Further, the controller may include the functionality to operate one or more client software programs such as those indicated above, which may be stored in memory (described below).

The mobile station 10 also comprises a user interface including a conventional earphone or speaker 56, a ringer 58, a microphone 60, a display 62, and a user input interface, all of which are coupled to the controller 54. Although not shown, the mobile station can include a battery for powering the various circuits that are required to operate the mobile station, as well as optionally providing mechanical vibration as a detectable output. The user input interface, which allows the mobile station to receive data, can comprise any of a number of devices allowing the mobile station to receive data, such as a keypad 54, a touch display (not shown), a joystick (not shown) or other input device. In embodiments including a keypad, the keypad includes the conventional numeric (0-9) and related keys (#, *), and other keys used for operating the mobile station.

The mobile station 10 can also include one or more means for sharing and/or obtaining data. For example, the mobile station can include a short-range radio frequency (RF) transceiver or interrogator 66 so that data can be shared with and/or obtained from electronic devices in accordance with RF techniques. The mobile station can additionally, or alternatively, include other short-range transceivers, such as, for example an infrared (IR) transceiver 68, and/or a Bluetooth (BT) transceiver 70 operating using Bluetooth brand wireless technology developed by the Bluetooth Special Interest Group. The mobile station can therefore additionally or alternatively be capable of transmitting data to and/or receiving data from electronic devices in accordance with such techniques. Although not shown, the mobile station can additionally or alternatively be capable of transmitting and/or receiving data from electronic devices according to a number of different wireless networking techniques, including WLAN techniques such as IEEE 802.11 techniques or the like.

The mobile station 10 can further include memory, such as a subscriber identity module (SIM) 72, a removable user identity module (R-UEVI) or the like, which typically stores information elements related to a mobile subscriber. In addition to the SIM, the mobile station can include other removable and/or fixed memory. In this regard, the mobile station can include volatile memory 74, such as volatile Random Access Memory (RAM) including a cache area for the temporary storage of data. The mobile station can also include other non-volatile memory 76, which can be embedded and/or may be removable. The non-volatile memory can additionally or alternatively comprise an EEPROM, flash memory or the like. The memories can store any of a number of software applications, instructions, pieces of information, and data, used by the mobile station to implement the functions of the mobile station.

In the embodiments of the invention discussed below, Session Initiation Protocol (SIP) is typically used when communicating the publication requests between entities on the communication network, so as to advise the various entities of presence information. SIP is a calling model that provides Application layer signaling protocol related to multimedia sessions (see e.g., Internet Engineering Task Force (IETF) request for comment RFC 3261, entitled *SIP: Session Initiation Protocol,* June 2002. In particular, SIP is an IETF standard protocol for initiating an interactive user session that involves multimedia elements such as video, voice, chat, gaming, and virtual reality. Like Hypertext Transfer Protocol (HTTP) or Simple Mail Transfer Protocol (SMTP), SIP works in the Application layer of the Open Systems Interconnection (OSI) communications model. The Application layer is the level responsible for ensuring that communication is possible.

SIP can establish multimedia sessions or Internet telephony calls, and modify or terminate them. Furthermore, SIP also has the ability to request asynchronous notification about changes of event states (see IETF request for comment RFC 3265, entitled *Session Initiation Protocol (SIP)-Specific Event Notification,* June 2002), while the manipulation of the event states happens via the SIP PUBLISH method (see IETF request for comment RFC 3903, entitled *Session Initiation Protocol (SIP) Extension for Event State Publication,* October 2004). The protocol can invite participants to unicast or multicast sessions that do not necessarily involve the initiator. Because the SIP supports name mapping and redirection services, it makes it possible for users to initiate and receive communications and services from any location, and for networks to identify the users wherever they are. SIP is a request-response protocol, dealing with requests from clients and responses from servers. Participants are identified by SIP URLs. Requests can be sent through any transport protocol, such as User Datagram Protocol (UDP), Simple Control Transport Protocol (SCTP), or Transmission Control Protocol (TCP). SIP determines the end system to be used for the session, the communication media and media parameters, and the called party's desire to engage in the communication. Once these are assured, SIP establishes call parameters at either end of the communication, and handles call transfer and termination.

While some embodiments are discussed in terms of SIP, they are exemplary in nature, and therefore, do not limit the invention to use with SIP. Rather, embodiments of the invention can operate generally in accordance with other protocols that would be capable of collecting and publishing presence information.

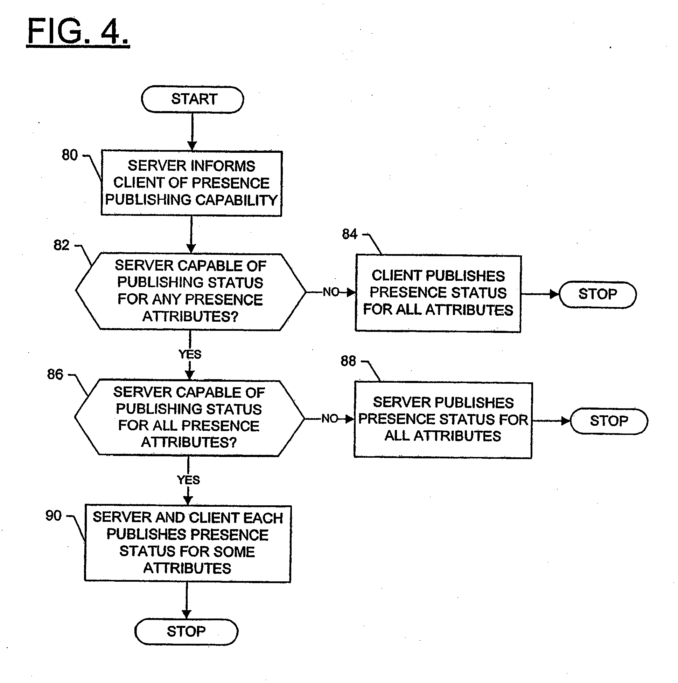

Referring now to FIG. 4, a flowchart of publishing presence capability is illustrated, in accordance with one embodiment of the invention. The PoC server may inform the PoC client of the PoC server's capability to publish presence information corresponding to the presence status of the PoC client. In one embodiment, the PoC server may be capable of publishing presence information corresponding to one or more of a plurality of predefined presence or status attributes. These predefined attributes may be: (1) application-specific (PoC) availability for session, (2) application-specific (PoC) availability for alerts, and (3) session participation. The information sent from the PoC server to the PoC client would typically indicate which one or more of these predefined attributes that the PoC server is capable of publishing presence information. In another embodiment of the invention, the PoC server may indicate only whether or not the PoC server is capable of publishing presence status information.

The presence publishing capability information may be sent from the PoC server to the PoC client using a static provisioning procedure. See block 80 of FIG. 4. One such static provisioning procedure is published by the Open Mobile Alliance (OMA). Additional information on the OMA provisioning procedure may be found in *SyncML Device Management Protocol,* Version 1.1.2, Open Mobile Alliance, December 2003, and *Provisioning Content* Candidate Version 1.1, Open Mobile Alliance, April 28, 2005. This method enables the PoC server to indicate to the PoC client the server's presence publishing capability as a provisioning parameter. If the PoC server supports a Presence Information Element, the PoC server can inform the PoC client using a binary value. As such, the provisioning parameter can give individual indications for all five attributes listed above. For example if the PoC server supports publishing the following presence attributes: "Application-specific (PoC) Availability for sessions," "Application-specific (PoC) Availability for alerts," and "Session Participation," then the corresponding provisioning parameter value may be '111xxxxx' (assuming the attributes are ordered as listed above, with "1" indicating availability and "O" indicating unavailability). To allow for future extension of this method, such as for Instant Messaging related features, the unused five bits (indicated as "x") could be reserved.

An alternative embodiment may use a single binary value to indicate to the PoC client whether or not the PoC Server is presence capable. In the above example, for this alternative embodiment the provisioning parameter value would be a simple '1'.

The PoC client uses the provisioning parameters when deciding the Presence Information Element the PoC client publishes. The PoC client then will not publish the Presence Information Elements that are published by the PoC Server. In this regard, the PoC client determines what, if any, presence status information to report based on the presence publishing capability information sent from the PoC server to the PoC client. If it is determined in block 82 of FIG. 4 that the PoC server is not capable of publishing presence status for any of the presence attributes, then the PoC client would typically report presence status for all presence attributes (that the PoC client is capable of reporting). See block 84. If it is determined in block 82 of FIG. 4 that the PoC server is capable of publishing presence status for any of the presence attributes, then it may be determined in block 86 if the PoC server is capable of publishing presence status for all of the presence attributes. If the PoC server is capable of publishing presence status for all of the presence attributes, then the PoC server will report presence status for all the attributes and the PoC client will not report presence status for any of the attributes. See block 88. If it is determined that the PoC server is capable of publishing presence status for some but not all of the presence attributes, then the PoC server will report presence status for the attributes that the PoC server is capable of publishing and the PoC client will report presence status for those attributes that the PoC server is not capable of publishing. See block 90. In this regard, the PoC server and the PoC client should not publish presence status information for the same attributes, thereby preventing conflicting status information from being sent to the presence server and preventing redundant presence status reporting.

Embodiments of the invention have been described above in which the PoC server informs the PoC client which ones of the plurality of presence attributes for which the PoC server will be reporting status information to the presence server. For the ones of the plurality of presence attributes for which the PoC server will be reporting status information, the PoC client will not report status information. For the ones of the plurality of presence attributes for which the PoC server will not be reporting status information, the PoC client will report status information if the PoC client is capable of reporting status information for those attributes. As such, the PoC server may control which entity reports presence status to the presence server. It should be appreciated, however, that alternative embodiments of the invention may enable the PoC client to control which entity reports presence status to the presence server. In such an alternative embodiment, the PoC client informs the PoC server which ones of the plurality of presence attributes for which the PoC client will be reporting status information to the presence server. For the ones of the plurality of presence attributes for which the PoC client will be reporting status information, the PoC server will typically not report status information. For the ones of the plurality of presence attributes for which the PoC client will not be reporting status information, the PoC server will typically report status information if the PoC server is capable of reporting status information for those attributes. While described above in conjunction with presence publication in a PoC service, presence publication in accordance with embodiments of the present invention may be utilized with other services relying upon various types of wireless communication techniques including, but not limited to, cellular communication. Moreover, while described above in a client-server architecture in which both the client and the server are considered network entities, presence publication may be performed in accordance with embodiments of the present invention by any number of network entities, such as two or more servers. Finally, the presence attributes described above are exemplary and entities may publish additional or different presence attributes in other embodiments of the present invention.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

Another example of the invention relates to a computer program product for presence publication, such as in a push-to-talk over cellular (PoC) service, the computer program product comprising at least one computer-readable storage medium having computer-readable program code portions stored therein, the computer-readable program code portions comprising: (1) a first executable portion capable of sending information from a first entity to a second entity, wherein the information defines which of a predefined plurality of presence attributes the first entity will report to a presence server; (2) a second executable portion capable of reporting presence status of the second entity by the first entity to the presence server for the presence attributes in the information sent from the first entity to the second entity; and (3) a third executable portion capable of reporting presence status of the second entity by the second entity to the presence server for at least some of the presence attributes not in the information sent from the first entity to the second entity. In one embodiment, the first entity is a PoC server and the second entity is a PoC client. In one embodiment, the presence attributes are selected from the group comprising availability for sessions, availability for alerts, and session participation. In one embodiment, the first executable portion sends information from the first entity to the second entity by setting, in a parameter value, a bit that is associated with a respective presence attribute. The parameter value generally includes a plurality of bits, one of which is associated with each presence attribute.

Another example of the invention relates to an access terminal capable of presence publication such as in a push-to-talk over cellular (PoC) service. The access terminal may comprise means, such as a processor, capable of: (1) receiving information from a network entity, wherein the information defines which of a predefined plurality of presence attributes the network entity will report to a presence server; and (2) reporting presence status of the access terminal to the presence server for at least some of the presence attributes not in the information sent from the network entity to the access terminal. In one embodiment, the network entity is a PoC server and the access terminal is a PoC client. In one embodiment, the presence attributes are selected from the group comprising availability for sessions, availability for alerts, willingness for session, willingness for alerts, and session participation. In one embodiment, the information received from the network entity comprises a bit in a parameter value that is associated with a respective presence attribute. The parameter value generally includes a plurality of bits, one of which is associated with each presence attribute.

Another example of the invention relates to a network entity capable of presence publication, such as in a push-to-talk over cellular (PoC) service. The network entity may comprise means, such as a processor, capable of: (1) sending information to an access terminal, wherein the information defines which of a predefined plurality of presence attributes the network entity will report to a presence server; and (2) reporting presence status of the access terminal by the network entity to the presence server for the presence attributes in the information sent from the network entity to the access terminal. In one embodiment, the network entity is a PoC server and the access terminal is a PoC client. In one embodiment, the presence attributes are selected from the group comprising availability for sessions, availability for alerts, and session participation. In one embodiment, the information is sent from the network entity to the access terminal by setting, in a parameter value, a bit that is associated with a respective presence attribute. The parameter value generally includes a plurality of bits, one of which is associated with each presence attribute.

Another example of the invention relates to a system capable of presence publication, wherein the system comprises an access terminal and a network entity. The network entity may be capable of: (1) sending information to the access terminal, wherein the information defines which of a predefined plurality of presence attributes the network entity will report to a presence server; and (2) reporting presence status of the access terminal to the presence server for the presence attributes in the information sent from the network entity to the access terminal. The access terminal may be capable of: (1) reporting presence status to the presence server for at least some of the presence attributes not in the information sent from the network entity to the access terminal. In one embodiment, the network entity is a PoC server and the access terminal is a PoC client. In one embodiment, the presence attributes are selected from the group comprising availability for sessions, availability for alerts, and session participation. In one embodiment, the information is sent from the network entity to the access terminal by setting, in a parameter value, a bit that is associated with a respective presence attribute. The parameter value generally includes a plurality of bits, one of which is associated with each presence attribute.

Another example of the invention relates to a processor capable of presence publication. The processor may be capable of: (1) sending information from a first entity to a second entity, wherein the information defines which of a predefined plurality of presence attributes the first entity will report to a presence server; and (2) reporting presence status of the second entity to the presence server for the presence attributes in the information sent from the first entity to the second entity. In one embodiment, the first entity is a PoC server and the second entity is a PoC client. In one embodiment, the presence attributes are selected from the group comprising availability for sessions, availability for alerts, and session participation. In one embodiment, the information is sent from the first entity to the second entity by setting, in a parameter value, a bit that is associated with a respective presence attribute. The parameter value generally includes a plurality of bits, one of which is associated with each presence attribute.

Another example of the invention relates to a system capable of presence publication, wherein the system comprises: (1) means for sending information from a first entity to a second entity, wherein the information defines which of a predefined plurality of presence attributes the first entity will report to a presence server; (2) means for reporting presence status of the second entity by the first entity to the presence server for the presence attributes in the information sent from the first entity to the second entity; and (3) means for reporting presence status of the second entity by the second entity to the presence server for at least some of the presence attributes not in the information sent from the first entity to the second entity. In one embodiment, the first entity is a PoC server and the second entity is a PoC client. In one embodiment, the presence attributes are selected from the group comprising availability for sessions, availability for alerts, and session participation. In one embodiment, the information is sent from the first entity to the second entity by setting, in a parameter value, a bit that is associated with a respective presence attribute. The parameter value generally includes a plurality of bits, one of which is associated with each presence attribute.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A first network entity (38) capable of presence publication in a communications system, the first network entity (38) comprising:
a processing element configured to send information to a second network entity (10), the information defining which of a predefined plurality of status attributes the first network entity will report to a presence server, the processing element further capable of reporting presence status to the presence server for the status attributes in the information sent from the first network entity (38) to the second network entity (10).

2. The first network entity of claim 1, wherein the processing element is capable of reporting presence status of the second network entity (10) to the presence server.

3. The first network entity of claim 1 or 2, wherein the second network entity (10) is an access terminal (10).

4. The first network entity (38) of claim 3, wherein the first network entity (38) is a push-to-talk over cellular [PoC] server and the access terminal (10) is a PoC client.

5. The first network entity (38) of any one of claims 1 to 4, wherein the status attributes comprise availability-for-sessions and/or availability-for-alerts and/or session-participation.

6. The first network entity (38) of any one of claims 1 to 5, wherein the first network entity sends the information to the second network entity (10) by setting, in a parameter value, a bit that is associated with a respective status attribute.

7. The first network entity (38) of claim 6, wherein the parameter value comprises a plurality of bits, one of the plurality of bits being associated with each status attribute.

8. The first network entity (38) of any one of claims 1 to 7, wherein the processing element sends information to the second network entity (10) using a provisioning procedure (80).

9. The first network entity (38) of claim 8, wherein the provisioning procedure comprises device management.

10. A second network entity (10), in the form of an access terminal (10), capable of presence publication in a communications system, the second network entity (10) comprising:
a processing element configured to receive provisioning information, the provisioning information defining which of a predefined plurality of status attributes a first network entity (38) will report to a presence server (25) on behalf of the second network entity (10), and the processing element further being configured to report presence status of the second network entity (10) to the presence server for at least one status attribute different than the status attributes defined by the provisioning information received by the second network entity (10) and configured not to report presence status of the second network entity (10) to the presence server for the status attributes defined by the provisioning information received by the second network entity (10).

11. The access terminal (10) of claim 10, wherein the first network entity (38) is a push-to-talk over cellular [PoC] server (38) and the access terminal (10) is a PoC client.

12. The access terminal (10) of claim 10 or 11, wherein the status attributes include availability-for-sessions and/or availability-for-alerts and/or session-participation.

13. The access terminal (10) of claim 10, 11 or 12, wherein the information received from the first network entity (38) comprises a bit in a parameter value that is associated with a respective status attribute.

14. The access terminal (10) of claim 13, wherein the parameter value generally includes a plurality of bits, one of the plurality of bits being associated with each status attribute.

15. The access terminal (10) of claim 13, wherein the processing element receives the provisioning information via a provisioning procedure.

16. The access terminal (10) of claim 15, wherein the provisioning procedure comprises device management.

17. A system comprising the first network entity (38) of any of claims 1 to 9 and the access terminal (10) of any of claims 10 to 16.

18. A method of presence publication in a communications system, the method comprising:
sending information from a first network entity (38) to a second network entity (10), the information defining which of a predefined plurality of status attributes the first network entity (38) will report to a presence server on behalf of the second network entity (10); and
reporting presence status by the first network entity (38) to the presence server on behalf of the second network entity (10) for the status attributes defined by the information sent from the first network entity (38) to the second network entity (10).

19. The method of claim 1918, further comprising: reporting presence status by the second network entity (10) to the presence server for at least one status attribute different than the status attributes defined by the information sent from the first network entity (38) to the second network entity (10).

20. The method of claim 18 or 19, wherein the first network entity (38) is a push-to-talk over cellular [PoC] server and the second network entity (10) is a PoC client.

21. The method of claim 18, 19 or 20, wherein the status attributes comprise availability-for-sessions and/or availability-for-alerts, and/or session-participation.

22. The method of any one of claims 18 to 21, wherein sending the information from the first network entity (38) to the second network entity (10) comprises setting, in a parameter value, a bit that is associated with a respective status attribute.

23. The method of claim 22, wherein the parameter value comprises a plurality of bits, one of the plurality of bits being associated with each status attribute.

24. The method of claim 18, wherein the information is sent from the first network entity (38) to the second network entity (10) using a provisioning procedure.

25. The method of claim 24, wherein the provisioning procedure comprises device management.

26. A method of presence publication in a communications system, the method comprising:
a second network entity (10) receiving provisioning information (80) from a first network entity (38), the provisioning information defining which of a predefined plurality of status attributes a first network entity (38) will report to a presence server (25) on behalf of the second network entity (10);
the second network entity (10) reporting presence status of the second network entity (10) to the presence server for at least one status attribute different than the status attributes defined by the provisioning information received by the second network entity (10); and
the second network entity (10) not reporting presence status of the second network entity (10) to the presence server for the status attributes defined by the provisioning information received by the second network entity (10).

27. The method of claim 26, wherein the first network entity (38) is a push-to-talk over cellular [PoC] server and the second network entity (10) is a PoC client.

28. The method of claim 26 or 27, wherein the status attributes include availability-for-sessions and/or availability-for-alerts and/or session-participation.

29. The method of any one of claims 26, 27 or 28, wherein the information received from the first network entity (38) comprises a bit in a parameter value that is associated with a respective status attribute.

30. The method of claim 29, wherein the parameter value generally includes a plurality of bits, one of the plurality of bits being associated with each status attribute.

31. The method of claim 26, comprising the processing element receiving the provisioning information via a provisioning procedure.

32. The method of claim 31, wherein the provisioning procedure comprises device management.

33. A computer program comprising machine readable instructions that when executed cause it to perform the method of any of claims 18 to 32.

## Patentansprüche

1. Erste Netzentität (38), die eine Präsenzveröffentlichung in einem Kommunikationssystem durchführen kann, wobei die erste Netzentität (38) Folgendes umfasst:
ein Verarbeitungselement, das konfiguriert ist, Informationen zu einer zweiten Netzentität (10) zu senden, wobei die Informationen definieren, welche von vordefinierten mehreren Statusattributen die erste Netzentität zu einem Präsenzserver berichten wird, wobei das Verarbeitungselement ferner den Präsenzstatus für die Statusattribute in den Informationen, die von der ersten Netzentität (38) zu der zweiten Netzentität (10) gesendet werden, zu dem Präsenzserver berichten kann.

2. Erste Netzentität nach Anspruch 1, wobei das Verarbeitungselement den Präsenzstatus der zweiten Netzentität (10) zu dem Präsenzserver berichten kann.

3. Erste Netzentität nach Anspruch 1 oder 2, wobei die zweite Netzentität (10) ein Zugangsendgerät (10) ist.

4. Erste Netzentität (38) nach Anspruch 3, wobei die erste Netzentität (38) ein "Push to Talk over cellular"-Server [PoC-Server] ist und das Zugangsendgerät (10) ein PoC-Client ist.

5. Erste Netzentität (38) nach einem der Ansprüche 1 bis 4, wobei die Statusattribute Verfügbarkeit für Sitzungen und/oder Verfügbarkeit für Alarme und/oder Sitzungsteilnahme umfassen.

6. Erste Netzentität (38) nach einem der Ansprüche 1 bis 5, wobei die erste Netzentität die Informationen zu der zweiten Netzentität (10) durch Einstellen eines Bits, das einem jeweiligen Statusattribut zugeordnet ist, in einem Parameterwert sendet.

7. Erste Netzentität (38) nach Anspruch 6, wobei der Parameterwert mehrere Bits umfasst, wobei jedem Statusattribut eines der mehreren Bits zugeordnet ist.

8. Erste Netzentität (38) nach einem der Ansprüche 1 bis 7, wobei das Verarbeitungselement Informationen zu der zweiten Netzentität (10) unter Verwendung einer Bereitstellungsprozedur (80) sendet.

9. Erste Netzentität (38) nach Anspruch 8, wobei die Bereitstellungsprozedur Gerätemanagement umfasst.

10. Zweite Netzentität (10) in Form eines Zugangsendgeräts (10), die eine Präsenzveröffentlichung in einem Kommunikationssystem durchführen kann, wobei die zweite Netzentität (10) Folgendes umfasst:
ein Verarbeitungselement, das konfiguriert ist, Bereitstellungsinformationen zu empfangen, wobei die Bereitstellungsinformationen definieren, welche von mehreren vordefinierten Statusattributen eine erste Netzentität (38) im Auftrag der zweiten Netzentität (10) zu einem Präsenzserver (25) berichten wird, und wobei das Verarbeitungselement ferner konfiguriert ist, den Präsenzstatus der zweiten Netzentität (10) zu dem Präsenzserver für wenigstens ein Statusattribut, das von den Statusattributen, die durch die Bereitstellungsinformationen definiert sind, die durch die zweite Netzentität (10) empfangen werden, verschieden ist, zu berichten, und konfiguriert ist, den Präsenzstatus der zweiten Netzentität (10) für die Präsenzattribute, die durch die Bereitstellungsinformationen, die durch die zweite Netzentität (10) empfangen werden, definiert sind, nicht zu dem Präsenzserver zu berichten.

11. Zugangsendgerät (10) nach Anspruch 10, wobei die erste Netzentität (38) ein "Push to Talk over cellular"-Server [PoC-Server] (38) ist und das Zugangsendgerät (10) ein PoC-Client ist.

12. Zugangsendgerät (10) nach Anspruch 10 oder 11, wobei die Statusattribute Verfügbarkeit für Sitzungen und/oder Verfügbarkeit für Alarme und/oder Sitzungsteilnahme enthalten.

13. Zugangsendgerät (10) nach Anspruch 10, 11 oder 12, wobei die Informationen, die von der ersten Netzentität (38) erhalten werden, ein Bit in einem Parameterwert, das einem jeweiligen Statusattribut zugeordnet ist, umfassen.

14. Zugangsendgerät (10) nach Anspruch 13, wobei der Parameterwert im Allgemeinen mehrere Bits enthält, wobei jedem Statusattribut eines der mehreren Bits zugeordnet ist.

15. Zugangsendgerät (10) nach Anspruch 13, wobei das Verarbeitungselement die Bereitstellungsinformationen über eine Bereitstellungsprozedur empfängt.

16. Zugangsendgerät (10) nach Anspruch 15, wobei die Bereitstellungsprozedur Gerätemanagement umfasst.

17. System, das die erste Netzentität (38) eines der Ansprüche 1 bis 9 und das Zugangsendgerät (10) eines der Ansprüche 10 bis 16 umfasst.

18. Verfahren zur Präsenzveröffentlichung in einem Kommunikationssystem, wobei das Verfahren Folgendes umfasst:
Senden von Informationen von einer ersten Netzentität (38) zu einer zweiten Netzentität (10), wobei die Informationen definieren, welche von vordefinierten mehreren Statusattributen die erste Netzentität (38) zu einem Präsenzserver im Auftrag der zweiten Netzentität (10) melden wird; und
Berichten des Präsenzstatus durch die erste Netzentität (38) zu dem Präsenzserver im Auftrag der zweiten Netzentität (10) für die Statusattribute, die durch die Informationen, die von der ersten Netzentität (38) zu der zweiten Netzentität (10) gesendet werden, definiert sind.

19. Verfahren nach Anspruch 18, das ferner Folgendes umfasst: Berichten des Präsenzstatus durch die zweite Netzentität (10) zu dem Präsenzserver für wenigstens ein Statusattribut, das ein anderes ist als die Statusattribute, die durch die von der ersten Netzentität (38) zu der zweiten Netzentität (10) gesendeten Informationen definiert sind.

20. Verfahren nach Anspruch 18 oder 19, wobei die erste Netzentität (38) ein "Push to talk over cellular"-Server [PoC-Server] ist und die zweite Netzentität (10) ein PoC-Client ist.

21. Verfahren nach Anspruch 18, 19 oder 20, wobei die Statusattribute Verfügbarkeit für Sitzungen und/oder Verfügbarkeit für Alarme und/oder Sitzungsteilnahme umfassen.

22. Verfahren nach einem der Ansprüche 18 bis 21, wobei das Senden der Informationen von der ersten Netzentität (38) zu der zweiten Netzentität (10) das Einstellen eines Bits, das einem jeweiligen Statusattribut zugeordnet ist, in einem Parameterwert umfasst.

23. Verfahren nach Anspruch 22, wobei der Parameterwert mehrere Bits umfasst, wobei jedem Statusattribut eines der mehreren Bits zugeordnet ist.

24. Verfahren nach Anspruch 18, wobei die Informationen unter Verwendung einer Bereitstellungsprozedur von der ersten Netzentität (38) zu der zweiten Netzentität (10) gesendet werden.

25. Verfahren nach Anspruch 24, wobei die Bereitstellungsprozedur Gerätemanagement umfasst.

26. Verfahren zur Präsenzveröffentlichung in einem Kommunikationssystem, wobei das Verfahren Folgendes umfasst:
eine zweite Netzentität (10) empfängt Bereitstellungsinformationen (80) von einer ersten Netzentität (38), wobei die Bereitstellungsinformationen definieren, welche von vordefinierten mehreren Statusattributen eine erste Netzentität (38) im Auftrag der zweiten Netzentität (10) zu einem Präsenzserver (25) berichten wird;
die zweite Netzentität (10) den Präsenzstatus der zweiten Netzentität (10) für wenigstens ein Statusattribut, das verschieden ist von den Statusattributen, die durch die Bereitstellungsinformationen definiert sind, die durch die zweite Netzentität (10) empfangen werden, zu dem Präsenzserver berichtetet; und
die zweite Netzentität (10) den Präsenzstatus der zweiten Netzentität (10) für die Statusattribute, die durch die Bereitstellungsinformationen definiert sind, die durch die zweite Netzentität (10) empfangen werden, nicht zu dem Präsenzserver berichtetet.

27. Verfahren nach Anspruch 26, wobei die erste Netzentität (38) ein "Push to talk over cellular"-Server [PoC-Server] ist und die zweite Netzentität (10) ein PoC-Client ist.

28. Verfahren nach Anspruch 26 oder 27, wobei die Statusattribute Verfügbarkeit für Sitzungen und/oder Verfügbarkeit für Alarme und/oder Sitzungsteilnahme enthalten.

29. Verfahren nach einem der Ansprüche 26, 27 oder 28, wobei die Informationen, die von der ersten Netzentität (38) erhalten werden, ein Bit in einem Parameterwert, das einem jeweiligen Statusattribut zugeordnet ist, umfassen.

30. Verfahren nach Anspruch 29, wobei der Parameterwert im Allgemeinen mehrere Bits enthält, wobei jedem Statusattribut eines der mehreren Bits zugeordnet ist.

31. Verfahren nach Anspruch 26, das umfasst, dass das Verarbeitungselement die Bereitstellungsinformationen über eine Bereitstellungsprozedur empfängt.

32. Verfahren nach Anspruch 31, wobei die Bereitstellungsprozedur Gerätemanagement umfasst.

33. Computerprogramm, das maschinenlesbare Anweisungen umfasst, die dann, wenn sie ausgeführt werden, bewirken, dass es das Verfahren nach einem der Ansprüche 18 bis 32 ausführt.

## Revendications

1. Première entité de réseau (38) capable d'une publication de présence dans un système de communications, la première entité de réseau (38) comprenant :
un élément de traitement configuré pour envoyer des informations à une seconde entité de réseau (10), les informations définissant celui d'une pluralité prédéfinie d'attributs d'états que la première entité de réseau va signaler à un serveur de présence, l'élément de traitement étant capable en outre de signaler un état de présence au serveur de présence des attributs d'état dans les informations envoyées par la première entité de réseau (38) à la seconde entité de réseau (10).

2. Première entité de réseau selon la revendication 1, dans laquelle l'élément de traitement est capable de signaler l'état de présence de la seconde entité de réseau (10) au serveur de présence.

3. Première entité de réseau selon la revendication 1 ou 2, dans laquelle la seconde entité de réseau (10) est un terminal d'accès (10).

4. Première entité de réseau (38) selon la revendication 3, dans laquelle la première entité de réseau (38) est un serveur de messagerie vocale instantanée PoC (push-to-talk over cellular) et le terminal d'accès (10) est un client PoC.

5. Première entité de réseau (38) selon l'une quelconque des revendications 1 à 4, dans laquelle les attributs d'état comprennent la disponibilité pour sessions et/ou la disponibilité pour alertes et/ou la participation aux sessions.

6. Première entité de réseau (38) selon l'une quelconque des revendications 1 à 5, dans laquelle la première entité de réseau envoie les informations à la seconde entité de réseau (10) en établissant, dans une valeur paramétrique, un bit qui est associé à un attribut d'état respectif.

7. Première entité de réseau (38) selon la revendication 6, dans laquelle la valeur paramétrique comprend une pluralité de bits, l'un de la pluralité de bits étant associé à chaque attribut d'état.

8. Première entité de réseau (38) selon l'une quelconque des revendications 1 à 7, dans laquelle l'élément de traitement envoie des informations à la seconde entité de réseau (10) en utilisant une procédure d'approvisionnement (80).

9. Première entité de réseau (38) selon la revendication 8, dans laquelle la procédure d'approvisionnement comprend une gestion de dispositifs.

10. Seconde entité de réseau (10), se présentant sous forme de terminal d'accès (10), capable d'une publication de présence dans un système de communications, la seconde entité de réseau (10) comprenant :
un élément de traitement configuré pour recevoir des informations d'approvisionnement, les informations d'approvisionnement définissant celui d'une pluralité prédéfinie d'attributs d'états qu'une première entité de réseau (38) va signaler à un serveur de présence (25) pour le compte de la seconde entité de réseau (10), et l'élément de traitement étant configuré en outre pour signaler un état de présence de la seconde entité de réseau (10) au serveur de présence pour au moins un attribut d'état différent des attributs d'état définis par les informations d'approvisionnement reçues par la seconde entité de réseau (10) et
configuré pour ne pas signaler l'état de présence de la seconde entité de réseau (10) au serveur de présence pour les attributs d'état définis par les informations d'approvisionnement reçues par la seconde entité de réseau (10).

11. Terminal d'accès (10) selon la revendication 10, dans lequel la première entité de réseau (38) est un serveur de message vocale instantanée PoC (push-to-talk over cellular) et le terminal d'accès (10) est un client PoC.

12. Terminal d'accès (10) selon la revendication 10 ou 11, dans lequel les attributs d'état comprennent la disponibilité pour sessions et/ou la disponibilité pour alertes et/ou la participation aux sessions.

13. Terminal d'accès (10) selon la revendication 10, 11 ou 12, dans lequel les informations reçues depuis la première entité de réseau (38) comprennent un bit dans une valeur paramétrique, qui est associé à un attribut d'état respectif.

14. Terminal d'accès (10) selon la revendication 13, dans lequel la valeur paramétrique comporte généralement une pluralité de bits, l'un de la pluralité de bits étant associé à chaque attribut d'état.

15. Terminal d'accès (10) selon la revendication 13, dans lequel l'élément de traitement reçoit les informations d'approvisionnement par l'intermédiaire d'une procédure d'approvisionnement.

16. Terminal d'accès (10) selon la revendication 13, dans lequel la procédure d'approvisionnement comprend une gestion de dispositifs.

17. Système comprenant la première entité de réseau (38) selon l'une quelconque des revendications 1 à 9 et le terminal d'accès (10) selon l'une quelconque des revendications 10 à 16.

18. Procédé de publication de présence dans un système de communications, le procédé comprenant :
l'envoi d'informations par une première entité de réseau (38) à une seconde entité de réseau (10),
les informations définissant celui d'une pluralité prédéfinie d'attributs d'états que la première entité de réseau (38) va signaler à un serveur de présence pour le compte de la seconde entité de réseau (10) ; et
la signalisation d'un état de présence par la première entité de réseau (38) au serveur de présence pour le compte de la seconde entité de réseau (10) des attributs d'état définis par les informations envoyées par la première entité de réseau (38) à la seconde entité de réseau (10).

19. Procédé selon la revendication 18, comprenant en outre : la signalisation d'un état de présence par la seconde entité de réseau (10) au serveur de présence pour au moins un attribut d'état différent des attributs d'état définis par les informations envoyées par la première entité de réseau (38) à la seconde entité de réseau (10).

20. Procédé selon la revendication 18 ou 19, dans lequel la première entité de réseau (38) est un serveur de messagerie vocale instantanée PoC (push-to-talk over cellular) et la seconde entité de réseau (10) est un client PoC.

21. Procédé selon la revendication 18, 19 ou 20, dans lequel les attributs d'état comprennent la disponibilité pour sessions et/ou la disponibilité pour alertes et/ou la participation aux sessions.

22. Procédé selon l'une quelconque des revendications 18 à 21, dans lequel l'envoi des informations par la première entité de réseau (38) à la seconde entité de réseau (10) comprend l'établissement, dans une valeur paramétrique, d'un bit qui est associé à un attribut d'état respectif.

23. Procédé selon la revendication 22, dans laquelle la valeur paramétrique comprend une pluralité de bits, l'un de la pluralité de bits étant associé à chaque attribut d'état.

24. Procédé selon la revendication 18, dans laquelle les informations sont envoyées par la première entité de réseau (38) à la seconde entité de réseau (10) en utilisant une procédure d'approvisionnement.

25. Procédé selon la revendication 24, dans laquelle la procédure d'approvisionnement comprend une gestion de dispositifs.

26. Procédé de publication de présence dans un système de communications, le procédé comprenant :
une seconde entité de réseau (10), recevant des informations d'approvisionnement (80) depuis une première entité de réseau (38), les informations d'approvisionnement définissant celui d'une pluralité prédéfinie d'attributs d'états qu'une première entité de réseau (38) va signaler à un serveur de présence (25) pour le compte de la seconde entité de réseau (10) ;
la seconde entité de réseau (10) signalant un état de présence de la seconde entité de réseau (10) au serveur de présence pour au moins un attribut d'état différent des attributs d'état définis par les informations d'approvisionnement reçues par le second entité de réseau (10) ; et
la seconde entité de réseau (10) ne signalant pas l'état de présence de la seconde entité de réseau (10) au serveur de présence pour les attributs d'état définis par les informations d'approvisionnement reçues par la seconde entité de réseau (10).

27. Procédé selon la revendication 26, dans lequel la première entité de réseau (38) est un serveur de messagerie vocale instantanée PoC (push-to-talk over cellular) et le terminal d'accès (10) est un client PoC.

28. Procédé selon la revendication 26 ou 27, dans lequel les attributs d'état comprennent la disponibilité pour sessions et/ou la disponibilité pour alertes et/ou la participation aux sessions.

29. Procédé selon la revendication 26 ou 27, dans lequel les informations reçues depuis la première entité de réseau (38) comprennent un bit dans une valeur paramétrique, qui est associé à un attribut d'état respectif.

30. Procédé selon la revendication 29, dans lequel la valeur paramétrique comporte généralement une pluralité de bits, l'un de la pluralité de bits étant associé à chaque attribut d'état.

31. Procédé selon la revendication 26, comprenant la réception par l'élément de traitement des informations d'approvisionnement par l'intermédiaire d'une procédure d'approvisionnement.

32. Procédé selon la revendication 31, dans lequel la procédure d'approvisionnement comprend une gestion de dispositifs.

33. Programme informatique comprenant des instructions lisibles en machine qui, lorsqu'elles sont exécutées amènent celui-ci à exécuter l'une quelconque des revendications 18 à 32.
